# EUROPÄISCHE PATENTSCHRIFT

(11) **EP 1 284 346 B1**
(45) Veröffentlichungstag und Bekanntmachung des Hinweises auf die Patenterteilung: **07.02.2007**
(21) Anmeldenummer: 02015275.7
(22) Anmeldetag: 09.07.2002
(51) Int. Cl.: F02B 43/10, B60L 11/18, H01M 8/06

(54) **Fahrzeug mit Verbrennungsmotor und Brennstoffzelle**
Vehicle with combustion engine and fuel cell
Véhicule avec moteur à combustion et pile à combustible

(30) Priorität: 16.08.2001 DE 10140210
(43) Veröffentlichungstag der Anmeldung: 19.02.2003
(73) Patentinhaber: Bayerische Motoren Werke Aktiengesellschaft, 80809 München (DE)
(72) Erfinder: Ohnemus, Ulrich, 82285 Hattenhofen (DE)

(56) Entgegenhaltungen:
- EP-A- 0 677 417
- DE-A- 19 703 171
- DE-C- 19 913 795
- US-A- 5 662 184
- PATENT ABSTRACTS OF JAPAN vol. 2000, no. 13, 5. Februar 2001 (2001-02-05) & JP 2000 303836 A (TOYOTA MOTOR CORP), 31. Oktober 2000 (2000-10-31)

## Beschreibung

Die vorliegende Erfindung betrifft ein Fahrzeug gemäß dem Oberbegriff des Patentanspruches 1.

Ein derartiges Fahrzeug ist aus PATENT ABSTRACTS OF JAPAN Bd.2000, Nr. 13, 5. Februar 2001 (2201-02-05) & JP 2000 303 836 A bekannt.

Bei modernen Mittel- und Oberklassefahrzeugen ist der Verbrennungsmotor in Fahrzeuglängsrichtung angeordnet. An der Stirnseite des Motors ist üblicherweise ein Nebenaggregateantrieb vorgesehen. Nebenaggregate wie z.B. Klimaanlagen, Hydraulikpumpen etc. sind im Frontbereich des Motors bzw. seitlich angebaut und werden über Keilrippenriemen angetrieben. Das Getriebe kann ein Stufenautomatik- oder ein Handschaltgetriebe sein und ist üblicherweise im Bereich zwischen dem Motor und der Hinterachse in der Nähe des Motors angeordnet. Zwischen dem Motor und dem Getriebe ist ein hydrodynamischer Drehmomentwandler bzw. eine trockene Reibkupplung vorgesehen. Der Anlasser für den Verbrennungsmotor ist üblicherweise ein Gleichstrommotor, der beim Starten sein Drehmoment über ein Planetengetriebe, einen Einspurmechanismus und einen Starterzahnkranz um ein vielfaches verstärkt an die Kurbelwelle des Motors abgibt.

Bei einem Fahrzeug mit Hinterachsantrieb führt vom Getriebeausgang eine Gelenkwelle nach hinten zu einem Verteilergetriebe (Achsgetriebe) und von dort über Antriebswellen zu den beiden Hinterrädern. Bei einem Fahrzeug mit Allradantrieb ist hinter dem Getriebe ein Verteilergetriebe mit oder ohne Übersetzungsstufe angeordnet, welches das Antriebsmoment auf eine Gelenkwelle zur Vorderachse und eine weitere Gelenkwelle zur Hinterachse "verteilt". In diesem Fall ist auch an der Vorderachse ein Verteilergetriebe zur "Aufteilung" des Antriebsdrehmoments auf die beiden Vorderräder vorgesehen.

Aufgrund diverser Vorteile ist zu erwarten, dass Fahrzeuge in Zukunft standardmäßig mit einem elektromagnetischen Ventiltrieb ausgestattet sind. Voraussetzung hierfür ist eine besonders leistungsfähige "Einrichtung zur Erzeugung elektrischer Energie". Insbesondere Luxusfahrzeuge werden in Zukunft mit weiteren elektrischen Systemen ausgestattet werden. Solche Systeme werden häufig unter dem Begriff "X-By-Wire" zusammengefaßt. Beispiele hierfür sind Brake-By-Wire Systeme, Shift-By-Wire Systeme, Steer-By-Wire Systeme etc. Versucht man die benötigte elektrische Energie mit einer Batterie und einem Kurbelwellenstartgenerator bereitzustellen, der die beiden Funktion "Motor starten" und "Strom generieren" vereinigt, so kommt es zu Bauraumproblemen. Ferner ergibt sich das Problem, dass man für die beiden Funktionen "Starten" und "Strom generieren" nicht gleichzeitig einen optimalen Wirkungsgrad erreichen kann.

Ein weiteres Problem herkömmlicher Fahrzeugkonzepte ist die Achslastverteilung, da die Vorderachse die Hauptlast des Antriebsstranges zu tragen hat. Insbesondere bei Luxusfahrzeugen weisen die Antriebsstränge ein hohes Gewicht auf, was auch zunehmend schwieriger mit der Forderung einer nachhaltigen Ressourcenschonung vereinbar ist.

Aufgabe der Erfindung ist es daher, ein Fahrzeug mit einem verbesserten "Antriebs- und Energieversorgungskonzept" zu schaffen.

Diese Aufgabe wird durch die Merkmale des Patentanspruches 1 gelöst. Vorteilhafte Ausgestaltungen und Weiterbildungen sind den Unteransprüchen zu entnehmen.

Das Grundprinzip der Erfindung besteht in einem Fahrzeug mit einem Verbrennungsmotor und einer Brennstoffzelle zur Versorgung elektrischer Fahrzeugsysteme, wobei die Brennstoffzelle thermisch mit dem Verbrennungsmotor "gekoppelt" ist. Vereinfacht ausgedrückt wird die Abwärme des Verbrennungsmotors zum Heizen der Brennstoffzelle, d.h. zum Aufrechterhalten der Arbeitstemperatur der Brennstoffzelle verwendet.

Nach heutigem Entwicklungsstand unterscheidet man fünf Grundtypen von Brennstoffzellen anhand des verwendeten Elektrolyten, nämlich:
- alkalische Brennstoffzelle
- Membranbrennstoffzelle
- phosphorsaure Brennstoffzelle
- Schmelzkarbonatbrennstoffzelle
- Festoxidbrennstoffzelle.

Die Arbeitstemperatur dieser fünf Grundtypen ist sehr unterschiedlich und liegt je nach Typ zwischen 70° und 1000°.

Gemäß der Erfindung wird die Abwärme des Verbrennungsmotors, die bei herkömmlichen Fahrzeugen weitgehend ungenutzt über die Auspuffanlage in die Umgebung entweicht, zum "Heizen" der Brennstoffzelle genutzt. Vorzugsweise ist die Brennstoffzelle unmittelbar an das Gehäuse des Verbrennungsmotors angeflanscht, was einen besonders effizienten Wärmeübergang ermöglicht.

Nach einer Weiterbildung der Erfindung ist die Brennstoffzelle dort angeordnet, wo sich bei herkömmlichen Fahrzeugen das Handschalt- bzw. Automatikgetriebe befindet. Bei dem Antriebskonzept gemäß der Erfindung ist das Getriebe nach hinten verlagert und zwar in den Bereich vor dem Hinterachsverteilergetriebe, was hinsichtlich der Achslastverteilung vorteilhaft ist.

Die Brennstoffzelle hat die Funktion einer zusätzlichen Energieerzeugungseinrichtung" (auxiliary power unit) und versorgt diverse elektrische Verbraucher mit Strom, wie z.B. einen elektromagnetischen Ventiltrieb (EVT), das Fahrzeugbordnetz, X-By-Wire-Systeme, Klimaanlage, sowie Verbraucher, die auch bei Stillstand des Verbrennungsmotors arbeiten.

Der für den Betrieb der Brennstoffzelle erforderliche Wasserstoff kann beispielsweise mittels eines Kraftstoffreformers aus dem Flüssigkraftstoff des Verbrennungsmotors gewonnen werden. Das bei der "Wasserstoffabspaltung" entstehende Reformat kann als "Kraftstoffzugabe" für den Verbrennungsmotor verwendet werden, zum Beispiel beim Kaltstart, bzw. bei Erdgasmotoren im "Fettbetrieb" zur Reduzierung von NOₓ. Alternativ dazu kann das Reformat auch vor dem Katalysator dem Abgas zugeführt werden, was eine Abgasnachbehandlung, d.h. eine Stickoxidreduktion mit Wasserstoff ermöglicht.

Das Getriebe, das gemäß der Erfindung im Bereich des Hinterachsverteilungsgetriebes angeordnet ist ("Transaxle-Anordnung"), kann ein schnelllaufendes Schaltgetriebe oder ein stufenloses Getriebe sein, wie z.B. ein Volltoroidgetriebe. Die Anordnung des Getriebes im Bereich der Hinterachse hat einerseits den Vorteil, dass die Gelenkwelle "nur" auf den Drehmoment-/Drehzahlbereich des Verbrennungsmotors ausgelegt werden muss. Hinsichtlich der Dimensionierung des Getriebes ist es nämlich sinnvoll, die Antriebsleistung mit möglichst hoher Drehzahl durch das Getriebe zu leiten, da bei hoher Getriebedrehzahl und niedrigem Drehmoment eine Gewichtsreduzierung des Getriebes möglich ist. Andererseits ermöglicht eine "Transaxle-Getriebeanordnung", eine Platzierung der Brennstoffzelle in unmittelbarer Motornähe, d.h. dort, wo das Getriebe bei herkömmlichen Fahrzeugen angeordnet ist. Als Getriebe kommt insbesondere ein Volltoroidgetriebe in Betracht, da es ohne Drehmomentwandler auskommt und eine relativ "schlanke Bauweise" aufweist.

Als Treibstoff für den Verbrennungsmotor kann Wasserstoff, Erdgas, Diesel oder Benzin verwendet werden. Vorzugsweise weist der Motor einen elektromagnetischen Ventiltrieb auf, da sich hieraus eine Vielzahl von Vorteilen ergeben, wie z.B. ein nahezu drosselfreier Ladungswechsel, die Möglichkeit einer variablen Zylinderabschaltung, die Reduzierung des Kaltstartschleppmoments etc. Der elektromagnetische Ventiltrieb wird vorzugsweise von der Brennstoffzelle mit Strom versorgt, wodurch sich ein guter elektrischer Wirkungsgrad ergibt.

Nach einer Weiterbildung der Erfindung ist ein zuschaltbarer elektrischer "Zusatzantrieb" vorgesehen. Vorzugsweise ist der Zusatzantrieb ein "scheibenförmiger" Elektromotor. Das heißt, er hat einen relativ großen Durchmesser und eine vergleichsweise kurze Baulänge, was eine Anordnung im Frontbereich des Verbrennungsmotors ermöglicht.

Der Zusatzantrieb hat verschiedene Funktionen. Zum einen dient er als "Starter" für den Verbrennungsmotor. Zum anderen ist er über eine "Kupplungseinrichtung" bzw. über einen "Freilauf" und Antriebswellen mit den Vorderrädern verbunden und kann als zuschaltbarer Vorderachsantrieb eingesetzt werden. Im Schubbetrieb des Fahrzeugs arbeitet der Zusatzantrieb als "Generator", was einen Rückgewinn von Bremsenergie (Rekuperation), das heißt eine Rückspeisung der im Schubbetrieb erzeugten elektrischen Energie in eine Fahrzeugbatterie ermöglicht. Im "Motorbetrieb" wird der Zusatzantrieb von der Brennstoffzelle mit Strom versorgt.

Der "Zusatzantrieb" kann auch "passiv" geschaltet werden. In diesem Fall dient der Zusatzantrieb lediglich als passive Drehmomentenübertragungseinrichtung, wobei das Antriebsmoment für die Vorderräder vom Verbrennungsmotor erzeugt wird. Das heißt, vom Verbrennungsmotor kann ein Drehmoment über den deaktivierten Zusatzantrieb zu den Vorderrädern übertragen werden.

Je nach Fahrzeuggröße kann vor dem Vorderachsverteilergetriebe ein kleines Getriebe angeordnet sein, welches das Drehmoment des Zusatzantriebs in ein Vorderachsdrehmoment umwandelt. Vorzugsweise ist der "Vorderachsantriebsstrang" nur für den Niedriglastbetrieb ausgelegt, was eine leichte und kostengünstige Bauweise ermöglicht.

Zusammenfassend werden mit der Erfindung folgende Vorteile erreicht:
- bessere Achslastverteilung durch die Getriebanordnung im Bereich der Hinterachse
- einfach und kostengünstig zu realisierender Zusatzantrieb für die Vorderachse
- Bremsenergierückgewinnung über die Vorderachse und den Zusatzantrieb
- kompaktes Schaltgetriebe mit wesentlich "erhöhter Drehmomentkapazität"
- Einsatz eines stufenlosen Getriebes, insbesondere eines Volltoroidgetriebes ohne Wandlerkupplung
- optimale Anordnung der als zusätzliche Energieversorgungseinheit dienenden Brennstoffzelle in direkter Motornähe zur Versorgung des Bordnetzes, des elektrischen Zusatzantriebes, der Standklimaanlage, und weiterer elektrischer Verbraucher auch bei Motorstillstand
- verringerte Kaltstartemissionen
- Verkürzung der Warmlaufphase des Motors
- Zusatzheizung für den Innenraum
- optimiertes Wärmemanagement
- Kostenersparnis bei der Katalysatortechnik, da in der Warmlauf- bzw. Kaltstartphase eine direkte Kraftstoffzugabe in den Motor möglich ist, sowie eine Zugabe in das Abgassystem vor dem Katalysator
- wirkungsgradoptimierte Stromerzeugung.

Im folgenden wird die Erfindung anhand eines Ausführungsbeispiel im Zusammenhang mit der Zeichnung näher erläutert. Es zeigen:
- Figur 1: eine schematische Darstellung eines Fahrzeugs gemäß der Erfindung; und
- Figur 2: den Zusatzantrieb gemäß der Erfindung in schematischer Darstellung.

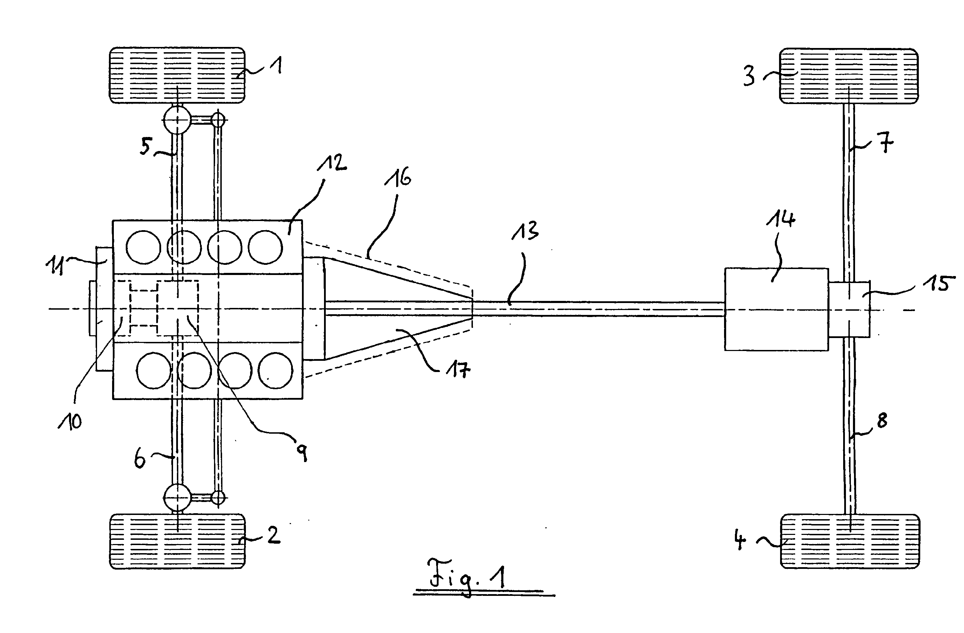

**Figur 1** zeigt ein Fahrzeug mit Vorderrädern 1, 2 und Hinterrädern 3, 4, die jeweils über eine zugeordnete Antriebswelle 5 - 8 antreibbar sind. Die Vorderräder 1, 2 sind über die zugeordneten Antriebswellen 5, 6, ein Vorderachsausgleichsgetriebe 9 sowie ein Vorderachsgetriebe 10 mit einem Elektromotor 11 verbunden. Der Elektromotor 11 hat einen relativ großen Durchmesser und eine kurze Baulänge und ist an der Frontseite eines Verbrennungsmotors 12 angeordnet.

Vom Verbrennungsmotor 12 führt eine Gelenkwelle 13 nach hinten zu einem Getriebe 14. Das Getriebe 14 kann beispielsweise ein Handschaltgetriebe, ein Stufenautomatikgetriebe oder ein stufenloses Getriebe, insbesondere ein Volltoroidgetriebe sein. Der Ausgang des Getriebes 14 ist mit einem Hinterachsverteilergetriebe 15 verbunden, welches das vom Verbrennungsmotor 12 gelieferte Drehmoment auf die beiden Hinterräder 3 und 4 aufteilt.

In einem Bereich 16 hinter dem Verbrennungsmotor 12, in dem bei herkömmlichen Fahrzeugen das Getriebe angeordnet ist, ist eine Brennstoffzelle 17 vorgesehen. Die Brennstoffzelle 17 thermisch mit dem Verbrennungsmotor 12 gekoppelt. Sie ist hierzu unmittelbar an den Verbrennungsmotor 12 angeflanscht. Alternativ oder zusätzlich kann ein Wärmetauscher vorgesehen sein, der die Motorabwärme der Brennstoffzelle 17 zuführt. Die Abwärme des Verbrennungsmotors 12 wird also nicht ungenutzt an die Umgebung abgegeben, sondern zum Aufrechterhalten der Betriebstemperatur der Brennstoffzelle verwendet. Ein derartiges "Wärmemanagement" ermöglicht eine Wirkungsgradoptimierung.

Die Brennstoffzelle 17 kann zum Beispiel von einem Reformer (nicht dargestellt) mit Wasserstoff versorgt werden. Der Reformer (nicht dargestellt) spaltet aus dem Kraftstoff des Verbrennungsmotors, zum Beispiel Benzin, Diesel oder Erdgas, Wasserstoff ab und führt den Wasserstoff der Brennstoffzelle 17 zu. Aus dem Wasserstoff und Luftsauerstoff wird dann Strom erzeugt.

Alternativ dazu kann die Brennstoffzelle 17 auch unmittelbar durch einen im Fahrzeug angeordneten Wasserstofftank mit Wasserstoff versorgt werden. Der Verbrennungsmotor kann dann entweder ein "Wasserstoffmotor" sein oder, wie oben erläutert, mit Erdgas, Benzin oder Diesel betrieben werden.

Der von der Brennstoffzelle 17 gelieferte Strom dient der Versorgung diverser elektrischer Verbraucher im Fahrzeug und speist zusätzlich eine hier nicht dargestellte Batterie. Insbesondere der Elektromotor 11 wird von der Brennstoffzelle 17 mit Strom versorgt. Zusätzlich versorgt die Brennstoffzelle 17 weitere elektrische "X-By-Wire-Systeme" mit Strom, wie z.B. eine Klimaanlage etc.

Über den Elektromotor 11, das Vorderachsgetriebe 10 und das Vorderachsverteilergetriebe 9 können die Vorderräder 1 und 2 angetrieben werden. Der Elektromotor 11 dient aber zusätzlich als Starter bzw. Anlasser für den Verbrennungsmotor 12.

Im Schubbetrieb des Fahrzeugs ist über den Elektromotor 11 ein Bremsenergierückgewinn möglich. Im Schubbetrieb kann nämlich über die Vorderräder 1, 2, die Antriebswellen 5, 6 das Vorderachsverteilergetriebe 9 und das Vorderachsgetriebe 10 durch den Elektromotor 11 generatorisch Strom erzeugt werden. Der aus der Bremsenergie erzeugte Strom kann dann in eine Fahrzeugbatterie eingespeist und dort chemisch gespeichert werden. Der Elektromotor 1 stellt also im Schubbetrieb eine "verschleißfreie" Bremse dar und ermöglicht eine Rekuperation von Bremsenergie.

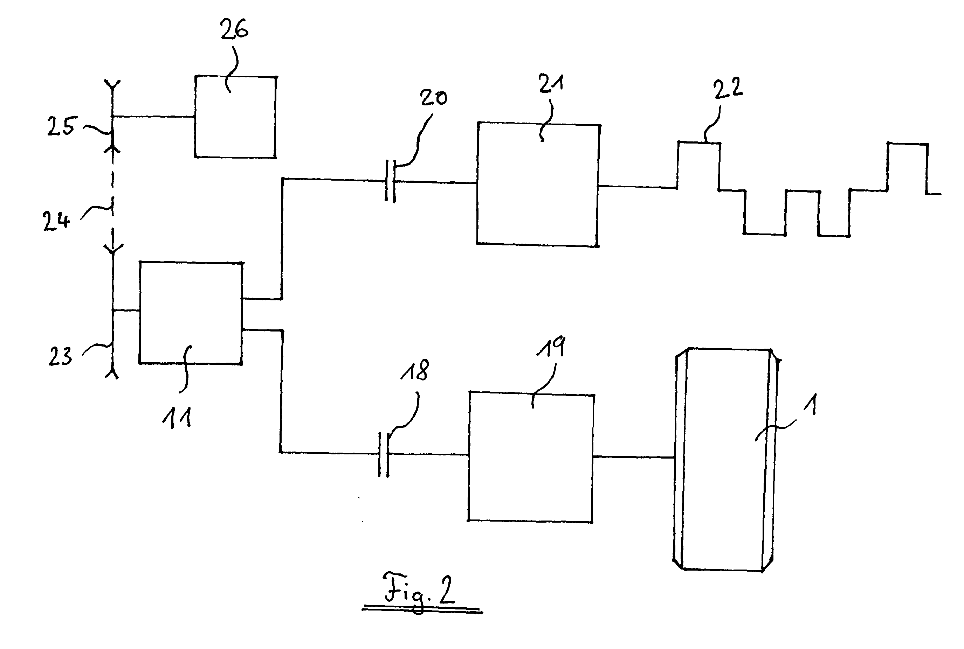

**Figur 2** beschreibt detaillierter die Funktionsweise des Elektromotors 11. Der Elektromotor 11 ist über eine Kupplung 18 und ein hier allgemein als "Radgetriebe" bezeichnetes Getriebe 19 mit den beiden Vorderrädern verbunden, wobei hier nur ein Vorderrad 1 dargestellt ist. Das "Radgetriebe" 19 ist durch das in Figur 1 dargestellte Vorderachsverteilergetriebe 9 und ein gegebenenfalls vorgesehenes Vorderachsgetriebe 10 gebildet.

Der Elektromotor 11 ist ferner über eine weitere Kupplung 20 und ein "Verbrennungsmotorgetriebe 21" mit einer Kurbelwelle 22 des Verbrennungsmotors verbunden.

Zusätzlich ist der Elektromotor 11 über einen Riemenantrieb 23-25 sowie gegebenenfalls über ein Nebenaggregatgetriebe mit einem Nebenaggregat 26 gekoppelt. Das Nebenaggregat 26 kann beispielsweise eine Klimaanlage, eine Hydraulikpumpe etc. sein.

Der Elektromotor 11 wird über hier nicht dargestellte elektrische Versorgungsleitungen von der Brennstoffzelle 17 mit Strom versorgt. Wenn die Kupplung 18 geschlossen und die Kupplung 20 geöffnet ist, dann kann über den Elektromotor 11 ein Drehmoment zu den Vorderrädern übertragen werden. In diesem Fall fungiert der Elektromotor 11 als Vorderachsantrieb. Umgekehrt kann im Schubbetrieb mechanisch Schub- bzw. Bremsenergie von den Vorderrädern über das Radgetriebe 19 und die Kupplung 18 in den Elektromotor eingeleitet werden. Der Elektromotor arbeitet dann als Generator und gibt den erzeugten Strom z.B. an eine hier nicht dargestellte Fahrzeugbatterie ab. Somit ist ein Bremsenergierückgewinn bzw. eine Rekuperation möglich.

Ferner ist ein "nicht elektrischer Vorderachsantrieb" möglich. Wenn nämlich die beiden Kupplungen 18, 20 geschlossen sind und der "Primärantrieb" der Vorderachse, das heißt der Elektromotor 11 abgeschaltet ist, dann kann der Elektromotor 11 als "passive" Drehmomentenübertragungseinrichtung eingesetzt werden. Das heißt über die Kurbelwelle 22, das Verbrennungsmotorgetriebe 21, die Kupplung 20, den Elektromotor 11, die Kupplung 18 und das Radgetriebe 19 kann Drehmoment vom Verbrennungsmotor zu den Vorderrädern übertragen werden. Es ist also auch ein verbrennungsmotorgetriebener zuschaltbarer Vorderradantrieb möglich.

Ferner kann ein "primärantriebsunabhängiger Nebenaggregateantrieb" dargestellt werden. Über den Elektromotor 11, gespeist aus der Batterie oder aus der Brennstoffzelle 17, können bei abgekoppeltem Verbrennungsmotor die Nebenaggregate, insbesondere die Klimaanlage mechanisch angetrieben werden. Dies hat zur Folge, dass aus der Klimaanlage eine Standklimaanlage werden kann und bei geeigneter Wahl der Übersetzungen im Nebenaggregateantrieb nicht alle Nebenaggregate bei Motorstillstand einen eigenen elektrischen Antrieb benötigen.

## Patentansprüche

1. Fahrzeug, mit einem Verbrennungsmotor und einer Brennstoffzelle zum Erzeugen elektrischer Energie, wobei die Brennstoffzelle (17) thermisch mit dem Verbrennungsmotor (12) gekoppelt ist, **dadurch gekennzeichnet, dass** die Brennstoffzelle (17) unmittelbar am Gehäuse des Verbrennungsmotors (12) angeordnet ist.

2. Fahrzeug nach Anspruch 1, **dadurch gekennzeichnet, dass** die Brennstoffzelle (17) im Bereich zwischen dem Verbrennungsmotor (12) und einer Fahrzeughinterachse (3, 4) angeordnet ist

3. Fahrzeug nach Anspruch 1 oder 2, **dadurch gekennzeichnet, dass** ein Reformer vorgesehen ist, der aus Kraftstoff zur Versorgung des Verbrennungsmotors (12) Brennstoff für die Brennstoffzelle (17) abspaltet und der Brennstoffzelle (17) zuführt.

4. Fahrzeug nach einem der Ansprüche 1 bis 3, **dadurch gekennzeichnet, dass** eine antreibbare Hinterachse (3, 4) vorgesehen ist, und dass im Bereich der Hinterachse (3, 4) ein Getriebe (14) zum Variieren der Hinterachsübersetzung vorgesehen ist.

5. Fahrzeug nach Anspruch 4, **dadurch gekennzeichnet, dass** das Getriebe (14) ein stufenloses Getriebe ist.

6. Fahrzeug nach Anspruch 4 oder 5, **dadurch gekennzeichnet, dass** das Getriebe (14) ein Volltoroidgetriebe ist.

7. Fahrzeug nach Anspruch 6, **dadurch gekennzeichnet, dass** das Getriebe (14) ein Handschaltgetriebe ist.

8. Fahrzeug nach Anspruch 6, **dadurch gekennzeichnet, dass** das Getriebe (14) ein Automatikgetriebe ist.

9. Fahrzeug nach einem der Ansprüche 1 bis 8, **dadurch gekennzeichnet, dass** der Verbrennungsmotor ein Wasserstoffmotor ist.

10. Fahrzeug nach einem der Ansprüche 1 bis 9, **dadurch gekennzeichnet, dass** der Verbrennungsmotor eine elektromagnetische Ventilsteuerung aufweist, wobei die elektromagnetische Ventilsteuerung von der Brennstoffzelle (17) mit Strom versorgt wird.

11. Fahrzeug nach einem der Ansprüche 1 bis 10, **dadurch gekennzeichnet, dass** im Frontbereich des Verbrennungsmotors ein zuschaltbarer elektrischer Zusatzantrieb (11) vorgesehen ist, der als Motor und als Generator betreibbar ist.

12. Fahrzeug nach Anspruch 11, **dadurch gekennzeichnet, dass** der Zusatzantrieb (11) über eine Kupplung (18) und ein Radgetriebe (19) mit Vorderrädern (1, 2) des Fahrzeugs verbunden ist.

13. Fahrzeug nach Anspruch 11 oder 12, **dadurch gekennzeichnet, dass** der Zusatzantrieb (11) über eine Kupplung (20) und ein Motorgetriebe (21) mit einer Kurbelwelle (22) des Verbrennungsmotors (12) kinematisch gekoppelt ist.

14. Fahrzeug nach einem der Ansprüche 11 bis 13, **dadurch gekennzeichnet, dass** der Zusatzantrieb elektrisch mit der Brennstoffzelle (17) verbunden ist.

15. Fahrzeug nach einem der Ansprüche 11 bis 14, **dadurch gekennzeichnet, dass** der Zusatzantrieb (11) über einen Riementrieb (23 - 25) mit elektrischen Energieverbrauchern (26) verbunden ist.

## Claims

1. A vehicle, comprising an internal combustion engine and a fuel cell for generating electrical energy, wherein the fuel cell (17) is thermally coupled to the internal combustion engine (12), **characterised in that** the fuel cell (17) is arranged directly on the housing of the internal combustion engine (12).

2. A vicle according to claim 1, **characterised in that** the fuel cell (17) is arranged in the region between the internal combustion engine (12) and a vehicle rear axle (3, 4).

3. A vehicle according to claim 1 or claim 2, **characterised in that** a reformer is provided which separates fuel for the fuel cell (17) from fuel to supply the internal combustion engine (12) and supplies it to the fuel cell (17).

4. A vehicle according to any one of claims 1 to 3, **characterised in that** a drivable rear axle (3, 4) is provided and **in that** in the region of the rear axle (3, 4), a transmission (14) is provided to vary the rear axle ratio.

5. A vehicle according to claim 4, **characterised in that** the transmission (14) is an infinitely variable transmission.

6. A vehicle according to claim 4 or claim 5, **characterised in that** the transmission (14) is a fully toroidal transmission.

7. A vehicle according to claim 6, **characterised in that** the transmission (14) is a manual transmission.

8. A vehicle according to claim 6, **characterised in that** the transmission (14) is an automatic transmission.

9. A vehicle according to any one of claims 1 to 8, **characterised in that** the internal combustion engine is a hydrogen engine.

10. A vehicle according to any one of claims 1 to 9, **characterised in that** the internal combustion engine has an electromagnetic timing gear, wherein the electromagnetic timing gear is supplied with electric current from the fuel cell (17).

11. A vehicle according to any one of claims 1 to 10, **characterised in that** a connectable electric auxiliary drive (11) is provided in the front region of the internal combustion engine and can be operated as an engine and as a generator.

12. A vehicle according to claim 11, **characterised in that** the auxiliary drive (11) is connected to front wheels (1, 2) of the vehicle via a clutch (18) and a wheel transmission (19).

13. A vehicle according to claim 11 or claim 12, **characterised in that** the auxiliary drive (11) is coupled kinematically to a crankshaft (22) of the internal combustion engine (12) by way of a coupling (20) and an engine transmission (21).

14. A vehicle according to any one of claims 11 to 13, **characterised in that** the auxiliary drive is electrically connected to the fuel cell (17).

15. A vehicle according to any one of claims 11 to 14, **characterised in that** the auxiliary drive (11) is connected via a belt drive (23 to 25) to electrical energy consuming devices (26).

## Revendications

1. Véhicule comprenant un moteur à combustion et une pile à combustible pour produire de l'énergie électrique, la pile à combustible (17) étant couplée thermiquement au moteur à combustion (12),
**caractérisé en ce que**
la pile à combustible (17) est disposée directement sur le boîtier du moteur à combustion (12).

2. Véhicule selon la revendication 1,
**caractérisé en ce que**
la pile à combustible (17) est disposée dans la zone entre le moteur à combustion (12) et un essieu arrière (3, 4) du véhicule.

3. Véhicule selon la revendication 1 ou 2,
**caractérisé en ce qu'**
un réformateur est prévu pour séparer du carburant servant à alimenter le moteur à combustion (12), le combustible pour la pile à combustible (17) et l'amener à la pile à combustible (17).

4. Véhicule selon l'une des revendications 1 à 3,
**caractérisé en ce qu'**
un essieu arrière (3, 4) peut être entraîné et une boîte de vitesses (14) au niveau de l'essieu arrière (3, 4) fait varier la démultiplication de l'essieu arrière.

5. Véhicule selon la revendication 4,
**caractérisé en ce que**
la boîte de vitesses (14) est une boîte de vitesses sans étages.

6. Véhicule selon la revendication 4 ou 5,
**caractérisé en ce que**
la boîte de vitesses (14) est une boîte de vitesses entièrement toroïdale.

7. Véhicule selon la revendication 6,
**caractérisé en ce que**
la boîte de vitesses (14) est une boîte de vitesses mécanique.

8. Véhicule selon la revendication 6,
**caractérisé en ce que**
la boîte de vitesses (14) est une boîte de vitesses automatique.

9. Véhicule selon l'une des revendications 1 à 8,
**caractérisé en ce que**
le moteur à combustion est un moteur à hydrogène.

10. Véhicule selon l'une des revendications 1 à 9,
**caractérisé en ce que**
le moteur à combustion présente une commande électromagnétique des soupapes, cette commande électromagnétique des soupapes étant alimentée en courant par la pile à combustible (17).

11. Véhicule selon l'une des revendications 1 à 10,
**caractérisé en ce qu'**
à l'avant du moteur à combustion, un moteur électrique additionnel (11) peut être commuté et fonctionner comme moteur et comme générateur.

12. Véhicule selon la revendication 11,
**caractérisé en ce que**
le moteur additionnel (11) est relié aux roues avant (1, 2) du véhicule par un embrayage (18) et un engrenage (19).

13. Véhicule selon la revendication 11 ou 12,
**caractérisé en ce que**
le moteur additionnel (11) est couplé de manière cinématique au vilebrequin (22) du moteur à combustion (12) par un embrayage (20) et une boîte de vitesses du moteur (21).

14. Véhicule selon l'une des revendications 1 à 13,
**caractérisé en ce que**
le moteur additionnel est relié électriquement à la pile à combustible (17).

15. Véhicule selon l'une des revendications 11 à 14,
**caractérisé en ce que**
le moteur additionnel (11) est relié aux appareils de consommation électrique (26) par une transmission à courroie (23 à 25).
